# EUROPÄISCHE PATENTSCHRIFT

(11) **EP 0 498 901 B1**
(45) Veröffentlichungstag und Bekanntmachung des Hinweises auf die Patenterteilung: **24.08.1994**
(21) Anmeldenummer: 91101845.5
(22) Anmeldetag: 09.02.1991
(51) Int. Cl.: C01B 25/10

(54) **Verfahren zur Stabilisierung von Phosphortrichlorid**
Method for stabilization of phosphorus trichloride
Procédé de stabilisation de trichlorure de phosphore

(43) Veröffentlichungstag der Anmeldung: 19.08.1992
(73) Patentinhaber: Akzo Nobel N.V., 6824 BM Arnhem (NL)
(72) Erfinder: Schumann, Rudolf, Dr. Dipl.-Chem., O-4409 Raguhn (DE)

(56) Entgegenhaltungen:
- CHEMICAL ABSTRACTS, Band 90, Nr. 8, 19. Februar 1979, Seite 144,Zusammenfassung Nr. 57323v, Columbus, Ohio, US;& PL-A-85 068 (INSTYTUT CHEMII NIEORGANICZNEJ) 30-06-1876 (Kat. D,A)
- ZEITSCHR. F. ANORGANISCHE U. ALLGEM. CHEMIE, Band 451, Nr. 4, Seiten 189-192, April 1979; J. GALLUS-OLENDER et al.: "The purification of PCI3 from Pv by interaction with active silica"

## Beschreibung

Die Erfindung betrifft ein Verfahren zur Stabilisierung von Phosphortrichlorid.
Phosphortrichlorid wird technisch durch Reaktion von Phosphor mit Chlor heregestellt. Es enthält im allgemeinen weniger als 0,05 % Phosphoroxidchlorid, wenn es aus gereinigtem Chlor hergestellt oder bei Verwendung von ungereinigtem Chlor rektifiziert wird.
Phosphortrichlorid kann jedoch durch Sauerstoff oder Sauerstoff enthaltended Gase leicht zu Phosphoroxidchlorid oxydiert werden. Bei der Lagerung, dem Transport und der Verwendung von Phosphortrichlorid ist ein langsamer, ständiger Anstieg das Phosphoroxidchloridgehaltes zu beobachten. Das Phosphoroxidchlorid mindert die Qualität des Phosphortrichlorides und führt bei der chemischen Weiterverarbeitung zwangsläufig zu unerwünschten Nebenprodukten und dadurch zu Ausbeute- und Qualitätsverlusten beim gewünschten Endprodukt. So gelangt zum Beispiel bei der Weiterverarbeitung zu Phosphoropentachlorid oder Phosphorsulfochlorid das Phosphoroxidchlorid vollständig in das Endprodukt. Eine nachträgliche Abtrennung ist aufgrund der physikalischen Eigenschaften im Verhältnis zur Abtrennung aus Phosphortrichlorid sehr viel schwieriger. Bei der Weiterverarbeitung zu phosphoriger Säure entsteht aus dem Phosphoroxidchlorid Phosphorsäure und bei der Umsetzung mit Alkoholen zu Phosphiten werden Phosphate als. Nebenprodukt gebildet. Bei der Synthese von Tri-(2-Chlorethyl)-phosphit durch Reaktion mit Ethenoxid entsteht aus Phosphoroxidchlorid Tri-(2-Chlorethyl)-phosphat als störendes Nebenprodukt.
Bei der Synthese, Lagerung und dem Transport von Phosphortrichlorid ist daher darauf zu achten, daß unter weitgehendem Ausschluß von Luft oder anderen Sauerstoff enthaltenden Gasen gearbeitet wird. Es ist bekannt (Chem. Techn. 33 (1981), Heft 4, S. 191), das Phosphortrichlorid unter einem minimalen Überdruck eines trockenen, sauerstoffarmen Inertgases zu lagern. In der Praxis werden auch die Synthese von Phosphortrichlorid und der Transport unter weitgehendem Ausachluß von Sauerstoff, gegebenenfalls unter Schutz eines inerten Gases, wie z. B. Stickstoff oder Kohlendioxid, durchgeführt.
Trotzdem kommt es jedoch vor allem bei längeren Transport- und Lagerzeiten zu einer deutlichen Einwirkung von Sauerstoff und zur Bildung von Phosphoroxidchlorid. So treten zum Beispiel beim Versand in Kesselwagen vorwiegen Konzentrationen zwischen 0,2 und 0,8 % Phosphoroxidchlorid auf.
Eine nachträgliche oder nochmalige destillative Reinigung kann aufgrund des hohen apparativen und energetischen Aufwands nicht in Betracht gezogen werden.
Auch eine Verminderung und Stabilisierung des Phosphoroxidchlorid-Gehaltes durch Adsorptionsmittel wie zum Beispiel Silicagel (Gallus-Olender, I. und Franc, B.: Z. anorgan. allg. Chem. 451 (1979), S. 189 - 192 und PL-PS 85 068) ist wegen des hohen apparativen Aufwandes, der Kosten für das Adsorptionsmittel, der Produktverluste und der Entsorgung sehr nachteilig. So wird zum Beispiel für die Absenkung des POCl₃-Gehaltes von 0,78 auf 0,07 % gerechnet als H₃PO₄, und die Stabilisierung des Phosphortrichlorides eine Kontaktzeit von 21 Tagen und 10% Silicagel benötigt, bezogen auf die Phosphortrichloridmenge.

Ziel der Erfindung ist es, den technisch-ökonomischen Aufwand bei der Stabilisierung von Phosphortrichlorid zu verringern und Qualitätsverluste des Phosphortrichlorides während der Lagerung und dem Transport zu mindern.

Die Aufgabe der Erfindung besteht darin, ein Verfahren zur Stabilisierung von Phosphortrichlorid zu schaffen, bei dem die Bildung von Phosphoroxidchlorid im Phosphortrichlorid wesentlich verzögert und auf einen minimalen, die Weiterverarbeitung nicht mehr nachteilig beeinflußbaren Wert reduziert wird.

Erfindungsgemäß wird die Aufgabe dadurch gelöst, daß dem Phosphortrichlorid ein oder mehrere Derivate der Dithiocarbamidsäuren zugesetzt werden.
Die Derivate der Dithiocarbamidsäuren können zum Beispiel als Salze und/oder Ester und/oder Thiuramsulfide zugegeben werden.
Sehr gute Ergebnisse werden durch Zugabe von Alkalisalzen der Dithiocarbamidsäuren, insbesondere der Natrium- oder Kaliumsalze der Monomethyl-dithiocarbamidsäure und/oder Dimethyldithiocarbamidsäure und/oder Diphenyl-dithiocarbamidsäure, erreicht. Auch durch Zugabe der Thiuramsulfide Tetramethylthiuramdisulfid und/oder Tetraphenyl-thiuramdisulfid und/oder N,N'-Dimethyl-N,N'-diphenylthiuramdisulfid wird die Bildung von Phosphoroxidchlorid auf einen minimalen Wert reduziert.
Die Derivate der Dithiocarbamidsäuren werden vorzugsweise in einer Konzentration von 10⁻⁴ bis 10⁻² %, bezogen auf die Phosphortrichloridmenge, zugesetzt. Es ist auch möglich und vielfach zweckmäßig, ein weniglösliches Derivat auch in Konzentrationen von über 10⁻² %, bezogen auf die Phosphortrichloridmenge des jeweiligen Lagerbehälters, in die Lagerbehälter einzubringen und bei Wechsel des Phosphortrichlorides dort zu belassen. Es lagert sich zum Beispiel auf dem Boden und an den Wänden der Behälter ab. Beim Wechsel des Phosphortrichlorides löst sich jeweils entsprechend der vom Derivat selbst und der Temperatur abhängigen Löslichkeit erneut Derivat nach und wirkt wiederum stabilisierend. Es hat sich gezeigt, daß die Wirksamkeit der Derivate auch bei häufigem Wechsel des Phosphortrichlorides über Monate erhalten bleibt.
Die Menge des dem Phosphortrichlorid zuzugebenden Stabilisierungsmittels ist abhängig von der beabsichtigten Wirkung, wie Stabilisierungsgrad und Stabilisierungszeit sowie von der Löslichkeit des Derivates bzw. der Derivate der Dithiocarbamidsäuren im Phosphortrichlorid.
Derivate mit einer geringen Löslichkeit im Phosphortrichlorid sind z. B. dimethyl-dithiocarbamidsaures Natrium und monomethyl-dithiocarbomidsaures Natrium.

Die Derivate der Dithiocarbamidsäuren zeigen eine hervorragende stabilisierende Wirkung im Phosphortrichlorid gegen Sauerstoff enthaltende Gase. Die besten Ergebnisse wurden mit Alkalisalzen der Dithiocarbmidsäuren erzielt. Die Bildung von Phosphoroxidchlorid im Phosphortrichlorid wird dadurch bei Einwirkung von Luft so stark verzögert und in ihrem Mengenanteil so reduziert, daß das Phosphortrichlorid auch nach einer Lagerung bzw. einem Transport von mehreren Wochen seine ursprüngliche Qualität nahezu beibehält. Die chemische Weitverarbeitung des Phosphortrichlorides kann somit problemlos erfolgen und führt zu keinen Ausbeuteverlusten oder Qualitätsminderungen an den herzustellenden Endprodukten.

### Ausführungsbeispiel:

Die Erfindung soll nachstehend an mehreren Beispielen erläutert werden:

### Beispiel 1

Jeweils 100 g unter technischen Bedingungen frisch hergestellten Phosphortrichlorid wurden unter trockenem, sauerstofffreiem Argon in 500 ml-Glaskolben eingefüllt, mit einer bestimmten Menge eines oder mehrerer Derivate der Thiocarbamidsäuren versetzt und gut durchgemischt. Im Anschluß wurde das Argon durch normale Raumluft ersetzt und die Probe bei Raumtemperatur im Dunkeln gelagert. Unmittelbar vor Luftzutritt und nach 30 Tagen wurden Proben entnommen und infrarotspektroskopisch auf Phosphoroxidchlorid untersucht. Es wurden jeweils drei parallele Oxydationsversuche angesetzt und die Durchschnittswerte ermittelt.
Als Vergleich wurden von jeder Charge Phosphortrichlorid-Ausgangsprodukt drei Proben in der oben beschriebenen Weise ohne Zusatz angesetzt und die Phosphoroxidchloridbildung untersucht.
Die Ergebnisse sind in der nachfolgenden Tabelle angegeben.

| Zusatzstoff | Menge (mg) | Masseprozent Phosphoroxidchlorid | | |
|---|---|---|---|---|
| | | 1 | 2 | 3 |
| Tetramethyl-thiuramdisulfid | 1 | 0,03 | 1,3 | 0,06 |
| N,N'-Dimethyl-N,N'-diphenylthiuramdisulfid | 1 | 0,03 | 1,3 | 0,12 |
| Dimethyl-dithiocarbamidsaures Natrium | 1 | 0,03 | 1,3 | 0,04 |
| Diethyl-dithiocarbamidsaures Natrium | 1 | 0,03 | 1,3 | 0,05 |
| Diphenyl-dithiocarbamidsaures Natrium | 1 | 0,03 | 1,3 | 0,05 |
| Monomethyl-dithiocarbamidsaures Natrium | 1 | 0,03 | 1,3 | 0,05 |
| Monoethyl-dithiocarbamidsaures Kalium | 1 | 0,03 | 1,3 | 0,15 |
| Dimethyl-dithiocarbamidsäure-chlorid | 10 | 0,03 | 1,3 | 0,08 |
| Dimethyl-dithiocarbamidsaures Natrium | 0,1 | 0,03 | 1,3 | 0,06 |
| N,N-Pentamethylen-dithiocarbamidsaures Piperidin | 10 | 0,03 | 1,3 | 0,20 |
| N,N-Dibenzyl-dithiocarbamidsäureethylester | 10 | 0,03 | 1,3 | 0,28 |
| Tetramethylen-thiuramdisulfid und Dimethyl-dithiocarbamidsaures Natrium | je 0,5 | 0,04 | 1,2 | 0,06 |
| Tetramethylen-thiuramdisulfid und Monomethyl-dithiocarbamidsaures Natrium | je 0,5 | 0,04 | 1,2 | 0,05 |
| Tetramethylen-thiuramdisulfid und Dimethyl-dithiocarbamidsäurechlorid | je 0,5 | 0,04 | 1,2 | 0,08 |
| Monomethyl-dithiocarbamidsaures Natrium und Monoethyldithiocarbamidsaures Kalium | je 0,5 | 0,04 | 1,2 | 0,06 |
| Monomethyl-dithiocarbamidsaures Natrium und N,N-Dibenzyl-dithiocarbamidsäure-ethylester | je 0,5 | 0,04 | 1,2 | 0,07 |
| Dimethyl-dithiocarbamidsäure chlorid und N,N-Pentamethylen-dithiocarbamidsaures Piperidin | je 0,5 | 0,04 | 1,2 | 0,12 |
| 1 vor der Sauerstoffeinwirkung 2 nach der Sauerstoffeinwirkung ohne Zusatz 3 nach der Sauerstoffeinwirkung mit Zusatz | | | | |

### Beispiel 2

In einer mit Rückflußkühler und zur Gasverteilung mit Fritte ausgerüsteten Gaswaschlasche werden 100 ml Phosphortrichlorid mit einem Phosphoroxidchlorid-Gehalt von 0,03 % vorgelegt, mit dem Derivat oder dem Gemisch von Derivaten versetzt und innerhalb einer Stunde gleichmäßig mit 10 l Sauerstoffgas behandelt. Anschließend wird infrarotspektrometrisch auf Phosphoroxidchlorid geprüft. In der nachfolgenden Tabelle sind die erzielten Ergebnisse einer Probe ohne Zusatz gegenübergestellt.

| Zusatzstoff | Menge (mg) | Masseprozent Phosphoroxidchlorid |
|---|---|---|
| ohne | - | 22,5 |
| Monomethyl-dithiocarbamidsaures Natrium | 10 | 8,5 |
| Dimethyl-dithiocarbamidsaures Natrium | 10 | 6,4 |
| Tetramethyl-thiuramdisulfid | 10 | 5,2 |
| Dimethyl-dithiocarbamidsaures Natrium und Tetramethylthiuramdisulfid | je 5 | 6,0 |

### Beispiel 3

Jeweils 100 g frisch hergestelltes, technisches Phosphortrichlorid werden analog wie der in Beispiel 1 beschriebenen Weise mit zwei Derivaten behandelt und untersucht. Abweichend davon wird jedoch schon nach 10 Tagen der Phosphoroxidchloridgehalt geprüft, das Phosphortrichlorid anschließend vorsichtig vom Zusatzstoff getrennt, durch neues ersetzt, Luft eingeblasen, und nach weiteren 10 Tagen erneut auf Phosphoroxidchlorid geprüft. Der Austausch und die Prüfung werden nochmals zweimal wiederholt. Die Ergebnisse sind in der nachfolgenden Tabelle angegeben.

| Zusatzstoff | Menge (mg) | Masseprozent Phosphortrichlorid | | | | |
|---|---|---|---|---|---|---|
| | | 1 | 2 | 3 | 4 | 5 |
| ohne | - | 0,03 | 1,64 | 0,28 | 1,3 | 0,9 |
| Dimethyl-dithiocarbamidsaures Natrium | 10 | 0,03 | 0,05 | 0,03 | 0,05 | 0,04 |
| Monomethyl-dithiocarbamidsaures Natrium | 10 | 0,03 | 0,08 | 0,03 | 0,05 | 0,05 |
| 1 vor der Sauerstoffeinwirkung 2 bis 5 nach der Sauerstoffeinwirkung nach 10, 20, 30 und 40 Tagen | | | | | | |

## Patentansprüche

1. Verfahren zur Stabilisierung von Phosphortrichlorid, gekennzeichnet dadurch, daß dem Phosphortrichlorid ein oder mehrere Derivate der Dithiocarbamidsäuren zugesetzt werden.

2. Verfahren nach Anspruch 1, gekennzeichnet dadurch, daß die Derivate der Dithiocarbamidsäuren als Salze und/oder Ester und/oder Thiuramsulfide zugegeben werden.

3. Verfahren nach Anspruch 2, gekennzeichnet dadurch, daß als Salze die Alkalisalze der Dithiocarbamidsäuren zugegeben werden.

4. Verfahren nach Anspruch 3, gekennzeichnet dadurch, daß als Alkalisalze der Dithiocarbamidsäuren die Natrium- oder Kaliumsalze der Monomethyl-dithiocarbamidsäure und/oder Dimethyldithiocarbamidsäure und/oder Diphenyl-dithiocarbamidsäure zugegeben werden.

5. Verfahren nach Anspruch 2, gekennzeichnet dadurch, daß als Thiuramsulfide Tetramethyl-thiuramdisulfid und/oder Tetraphenylthiuramdisulfid und/oder N,N'-Dimethyl-N,N'-diphenylthiuramsulfid zugegeben werden.

6. Verfahren nach den Ansprüchen 1 bis 5, gekennzeichnet dadurch, daß die Derivate der Dithiocarbamidsäuren in einer Gesamtkonzentration von 10⁻⁴ bis 10⁻² %, bezogen auf die Phosphortrichloridmenge, zugegeben werden.

7. Verfahren nach den Ansprüchen 1 bis 5, gekennzeichnet dadurch, daß die Derivate der Dithiocarbamidsäuren, die in Phosphortrichlorid nur eine geringe Löslichkeit aufweisen, in einer Gesamtkonzentration von über 10⁻² %, bezogen auf die Phosphortrichloridmenge, zugegeben werden.

## Claims

1. Method for stabilizing phosphor trichloride, wherein one or several derivatives of dithiocarbamic acids are added to the said phosphor trichloride.

2. Method of claim 1, wherein derivatives of dithiocarbamic acids as salts and/or esters and/or thiuram sulphides are added.

3. Method of claim 2, wherein alkali salts of dithiovarbamic acids as said salts are added.

4. Method of claim 3, wherein sodium or potassium salts of monomethyl dithiocarbamic acid, and/or those of dimethyl dithiocarbamic acid, and/or those of diphenyl dithiocarbamic acid as said alkali salts of dithiocarbamic acids are added.

5. Method of claim 2, wherein tetramethyl thiuram disulphide, and/or tetraphenyl thiuram disulphide, and/or N,N'-dimethyl-N,N'-diphenyl thiuram sulphide as thiuram sulphides are added.

6. Methode of claims 1 to 5, wherein derivatives of dithiocarbamic acids with a total concentration of 10⁻⁴ to 10⁻² % referring to the amount of phosphor trichloride are added.

7. Method of claims 1 to 5, wherein derivatives of dithiocarbamic acids being only marginally soluble in phosphor trichloride with a total concentration of more than 10⁻² % referring to the amount of phosphor trichloride are added.

## Revendications

1. Procédé pour la stabilisation du trichlorure de phosphore, caractérisé du fait qu'on ajoute au trichlorure de phosphore un ou plusieurs dérivé(s) des acides dithiocarbamide.

2. Procédé selon la prétention 1, caractérisé du fait qu'on ajoute les dérivés des acides dithiocarbamide en forme des sels et/ou en forme des esters et/ou en forme des sulfures de thiurame.

3. Procédé selon la prétention 2, caractérisé du fait que comme les sels à ajouter s'appliquent les sels alcalins des acides dithiocarbamide.

4. Procédé selon la prétention 3, caractérisé du fait que comme les sels alcalins des acides dithiocarbamide à ajouter s'appliquent les sels de sodium ou de potassium de l'acide monométhyl-dithiocarbamide et/ou ceux de l'acide diméthyl-dithiocarbamide et/ou ceux de l'acide dipnényl-dithiocarbamide.

5. Procédé selon la prétention 2, caractérisé du fait que comme les sulfures de thiurame à ajouter s' appliquent le tétraméthyl-disulfure de thiurame et/ou le tétraphényl-disulfure de thiurame et/ou le N,N'-diméthyl-N,N'-dipnén ylsulfure de thiurame.

6. Procédé selon les prétentions 1 à 5, caractérisé du fait que les dérivés des acides dithiocarbamide sont à ajouter en une concentration totale de 10⁻⁴ à 10⁻² %_{,} par rapport à la quantité du trichlorure de phosphore.

7. Procédé selon les prétentions 1 à 5, caractérisé du fait que les dérivés des acides dithiocarbamide, n'ayant qu'une solubilité faible au trichlorure de phosphore, sont à ajouter en une concentration totale de plus de 10⁻² %_{,} par rapport à la quantité du trichlorure de phosphore.
